Europäisches Patentamt

European Patent Office

Office européen des brevets

(11) Veröffentlichungsnummer: **0 348 554**

**A2**

(12) **EUROPÄISCHE PATENTANMELDUNG**

(21) Anmeldenummer: 88116395.0

(22) Anmeldetag: 04.10.88

(51) Int. Cl.⁴: **C08J 11/00**

(30) Priorität: 28.06.88 DE 3821761

(43) Veröffentlichungstag der Anmeldung:
03.01.90 Patentblatt 90/01

(84) Benannte Vertragsstaaten:
**BE DE ES FR GB IT NL**

(71) Anmelder: **CHEMISCHE WERKE KLUTHE
GMBH & CO.
Gottlieb-Daimler-Strasse 12
D-6900 Heidelberg(DE)**

(72) Erfinder: **Kluthe, Hans
Von der Tann Strasse 13
D-6900 Heidelberg(DE)**
Erfinder: **Kluthe, Martin, Dipl.-Kaufmann
Im Eichwald 2a
D-6900 Heidelberg(DE)**

(74) Vertreter: **Ratzel, Gerhard, Dr.
Seckenheimer Strasse 36a
D-6800 Mannheim 1(DE)**

(54) Verfahren zur Rückgewinnung von Pigmenten, Bindemitteln und Lösungsmitteln aus mit Lack verschmutzten Spülverdünnern.

(57) Die Erfindung betrifft ein Verfahren zum Rückgewinnen von Pigmenten, Bindemitteln und Lösungsmitteln aus mit Lack verschmutzten Spülverdünnern, wobei man die mit Lacken verschmutzten Waschverdünner bzw. Reinigungsverdünner mit konzentrierter Säure versetzt, sodann gründlich rührt, anschließend unter weiterem Rühren mit Lauge versetzt und hierauf die Flüssigkeit einer Schwerkraftabscheidung unterwirft unter Abtrennung der suspendierten Bestandteile von den flüssigen Bestandteilen, daß sodann die flüssigen Bestandteile einer destillativen Trennung unterworfen werden. Gegebenenfalls kann der Klarablauf nach vorherigem Ansäuren und Neutralisieren einer zweiten Schwerkraftabscheidung unterworfen werden, wobei sich die Feinstpigmente abscheiden.

EP 0 348 554 A2

## Verfahren zum Rückgewinnen von Pigmenten, Bindemitteln und Lösungsmitteln aus mit Lack verschmutzten Spülverdünnern

Die Erfindung betrifft ein neues Verfahren zur Rückgewinnung von Pigmenten, Bindemitteln und Lösungsmitteln aus mit Lack, insbesondere mit 2 bis 30% lackverschmutzten Spülverdünnern auf organischer Basis.

Bekanntlich werden in der lackverarbeitenden Industrie Lösungsmittel zur Spülung der Ringleitungen und Lackieranlagen, ferner zur Reinigung der Spritzpistolen und Spritzpistolenleitungen sowie zur Säuberung der Lackiereinrichtungen und Lackiergeräte verwendet.

Die bei diesen Reinigungsvorgängen in Lösung gehenden Lackreste verschmutzen naturgemäß diese aus Lösungsmittel bestehenden sogenannten Spülverdünner bzw. Lackverdünner, die dann, je nach der Anwendungsweise bei einer 2 bis 30%igen Verschmutzung ausgetauscht und nach Möglichkeit dem Lösungsmittellieferanten zurückgegeben werden, dem sodann die Entsorgung des Materials obliegt.

Bei den Verfahren des Standes der Technik wird der verschmutzte Spülverdünner einer Destillation unterworfen, wobei zwischen 5 und 40 Vol.-% als Destillationsrückstand anfällt, der unverwertbar ist, weil er ausreagierten Feststoff beinhaltet bzw. aus diesem besteht. Dieser Rückstand ist auch wegen der darin verbliebenen Lösungsmittelreste umweltgefährdend und muß deshalb sehr kostenaufwendig als Sondermüll entsorgt werden. Ein weiterer Nachteil dieses Verfahrens des Standes der Technik besteht darin, daß das Destillat aus Gründen hoher Temperaturbelastungen zum Zwecke der Minimierung der Rückstandsmenge, gegen Ende des Destillationsprozesses oftmals nicht frei von Crack-Produkten ist.

Demgegenüber liegt vorliegender Erfindung die Aufgabe zugrunde, ein Verfahren zu schaffen, bei dem die Menge des noch zu entsorgenden Rückstands auf ca. 0,1 bis 5 Vol.-% abgesenkt wird und gleichzeitig die Menge an rückgewinnbaren Pigmenten, Bindemitteln und Lösungsmitteln sprunghaft erhöht wird.

Diese Aufgabe wird bei einem Verfahren der eingangs genannten Gattung dadurch gelöst, daß der mit Lacken verschmutzte Waschverdünner bzw. Reinigungsverdünner mit konzentrierter Säure vermischt, sodann gerührt und anschließend unter weiterem Rühren mit Lauge versetzt wird, so daß eine Neutralisation erfolgt. Die solchermaßen behandelte Lösung wird sodann einem Schwerkraftabscheider, vorzugsweise einem Zentrifugalseparator zugeführt, wobei der Klarablauf lediglich noch einige Prozent Festkörper enthält und der größte Teil des Pigments und insbesondere des Grobpigments in der Abscheidekammer des Schwerkraftabscheiders, insbesondere in der Kammer des Zentrifugalseparators verbleibt.

Nach einer bevorzugten Ausführungsform vorliegender Erfindung wird der Klarablauf dann nochmals in einem Schwerkraftabscheider, vorzugsweise in einem Zentrifugalseparator, behandelt, wobei die Feinst pigmente mit Teilchengrößen von ca. 0,05 bis 0,2 Mikrometer abgetrennt werden. Zuvor kann ein nochmaliges Ansäuern und anschließendes nochmaliges Neutralisieren mit Lauge stattfinden.

Anschließend erfolgt eine schonende Destillation, vorzugsweise in einem Vakuum von 0,2 bar und einer Temperatur von 80 bis 90 °C oder 70 bis 90 °C; man erhält hierbei ein Gemisch von Lösungsmittel und Bindemitteln, das auf ein gewünschtes Volumenverhältnis eingeengt werden kann. Als hauptsächliche Inhaltsstoffe der Waschverdünner bzw. Reinigungsverdünner sind Gemische von Estern, Ketonen, Alkoholen, Aromaten und Aliphaten zu nennen. Grundsätzlich kommen alle Lösungsmittel in Betracht, wie sie in der Lackindustrie zum Lösen von Lacken verwendet werden. Es kann sich hierbei sowohl um Einkomponenten-Verdünner, als auch um Vielstoff-Gemische handeln. Im Einzelfall ist dies insbesondere abhängig von den verwendeten Bindemitteln und/oder den jeweils durchzuführenden Reinigungs- und Spülprozessen.

Der Gehalt an gelöstem Lack liegt bei den verschmutzten Verdünnern in der Regel bei 2 bis 20%, bezogen auf die nicht flüchtige Substanz.

Als Schwerkraftabscheider werden insbesondere, wie bereits ausgeführt, Zentrifugalseparatoren eingesetzt, es lassen sich jedoch grundsätzlich alle Arten von Schwerkraftabscheidern verwenden, wobei der Begriff Schwerkraftabscheider weit zu fassen ist und grundsätzlich jede Art von Trennung der Festphase und der flüssigen Phase unter Anwendung der Schwerkraft anwendbar ist. Die Schwerkraftabscheidung kann auch durch Filtration bewirkt werden.

Die aufgefangenen Farbpigmente können gegebenenfalls in einem, vom späteren Verwendungszweck abhängigen Lösungsmittel suspendiert und beispielsweise zu einer Pigmentpaste weiter verarbeitet werden. Diese Pigmentpaste stellt einen Wertstoff für den Einsatz in Lacksystemen einfacher bis mittlerer Güte sowie für die Herstellung von Grundierungen dar.

Der Flüssigablauf aus dem Schwerkraftabscheider, insbesondere dem Zentrifugalseparator enthält im wesentlichen Lösungsmittel, Bindemittel, gegebenenfalls Lackhilfsstoffe und geringere Mengen an Feinstpigmenten.

Die geklärte Phase wird, wie bereits oben grundsätzlich angegeben, in einem Destillationsverfahren bis auf die gewünschte Bindemittelkonzentration eingeengt, die für bestimmte Anwendungen geeignet erscheint.

Die Destillation wird schonend unter Vakuum durchgeführt und bei der gewünschten Bindemittelkonzentration angehalten. Dabei ist das Destillat fortschrittlicherweise frei von Crack-Produkten.

Der Rückstand kann einer weiteren Aufbereitung unterworfen werden, um auch die Feinstpigmente gänzlich zu entfernen.

Die Zugabe der konzentrierten Säure, vorzugsweise der konzentrierten Mineralsäure, insbesondere von 96 Gew.-%iger Schwefelsäure bewirkt, daß die Wachse und aminogruppenhaltigen Inhaltsstoffe durch die Säure beeinflußt und die Ausfällung auch der Feinstpigmente beschleunigt wird.

Die beim erfindungsgemäßen Verfahren ebenfalls anfallende Harzlösung läßt sich sowohl direkt als Holzschutzmittel-Basis, die beispielsweise einen Gehalt von 20% an nicht vernetzten Harzen aufweist, verwenden und ferner nach Zusatz von Füllstoffen zur Herstellung von thermisch härtbaren Preßlingen (= Formkörpern) einsetzen. Ferner lassen sich diese Harzlösungen vorteilhaft als Lacke, Lasuren und Grundierungen für metallische und nicht metallische Oberflächen einsetzen.

Das Wesen vorliegender Erfindung wird nun anhand eines Ausführungsbeispiels weiterhin erläutert:

Ausführungsbeispiel 1

Ein Wasch- bzw. Reinigungsverdünner auf der Basis folgender Inhaltsstoffe: Gemische von Estern, aromatischen Kohlenwasserstoffen, Glycoläthern und Alkoholen der mit ca. 13,5% an Lacken der Automobilindustrie auf der Basis von etwa 50 bis 60% Harzbindemittel, z.B. Alkydharze, Alkydmelamin-Harze, 20% Pigmente und Füllstoffe und 20% Lösungsmittel verschmutzt ist,wird mit 1,84 Gew.-% Schwefelsäure (96%ig) vermischt und 30 Minuten intensiv gerührt.

Sodann erfolgt eine Neutralisation mit 2,89 Gew.-% Natronlauge (50%ig) unter ebenfalls 30 minütigem intensivem Rühren.

Die solchermaßen behandelte Lösung bzw. Suspension wird einem Zentrifugalseparator zugeführt. Der dort gewonnene Klarablauf enthält noch ca. 11% Festkörper, wobei die Differenz als Grobpigment in der Kammer des Separators verblieben ist.

Anschließend wird der Klarablauf nochmals der oben beschriebenen Prozedur unterworfen, wobei die Feinstpigmente mit Teilchengrößen von ca. 0,05 bis 0,2 Mikrometer abgetrennt werden.

In der dara/folgenden schonenden Destillation unter einem Vakuum von 0,2 bar und einer Temperatur von 80 bis 90°C wird das Lösungsmittel-Bindemittel-Gemisch auf ein Volumenverhältnis bis zu 1:4 eingeengt.

Ausführungsbeispiel 2

Ein Waschverdünner auf Basis von Estern, Aromaten, Alkoholen, Ketonen und Benzinen, der mit ca. 13% an Lacken der Automobilindustrie auf der Basis von ca. 50-60% Harzbindemitteln, z.B. Alkydharze, Alkydmelamin-Harze, 20% Pigmente und Füllstoffe und 20% Lösungsmittel verschmutzt ist, wird einem Zentrifugal-Separator zugeführt. Der dort gewonnene Klarablauf enthält noch ca. 11% Festkörper, wobei die Differenz als Grobpigment in der Kammer des Separators verblieben ist.

Der Klarablauf des Separators wird mit 1,84 Gew.% Schwefelsäure (96%ig) vermischt und 30 Minuten intensiv gerührt. Sodann erfolgt eine Neutralisation mit 2,89 Gew.% Natronlauge 50%ig) unter ebenfalls 30 minütigem intensivem Rühren. In der dara/folgenden schonenden Destillation unter einem Vakuum von 0,2 bar und einer Temperatur von 80-90°C wird das Lösemittel-Bindemittel-Gemisch auf ein Volumenverhältnis von 3:2 eingeengt.

Ausführungsbeispiel 3

Ein Waschverdünner auf Basis von Estern, Aromaten, Alkoholen, Ketonen und Benzinen, der mit ca. 13% Lacken der Automobilindustrie auf der Basis von ca. 50-60% Harzbindemittel, z.B. Alkydharze, Alkydmelamin-Harze, 20% Pigmente und Füllstoffe und 20% Lösungsmittel verschmutzt ist, wird einem Zentrifugal-Separator zugeführt.

Der dort gewonnene Klarablauf enthält noch ca. 11% Festkörper, wobei die Differenz als Grobpigment in der Kammer des Separators verblieben ist.

Der Klarablauf des Separators wird mit 1,84 Gew.% Schwefelsäure (96%ig) vermischt und 30 Minuten intensiv gerührt.

Sodann erfolgt eine Neutralisation mit 2,89 Gew.-% Natronlauge (50%ig), vermischt unter ebenfalls 30 minütigem intensivem Rühren.

Anschließend wird der Klarablauf nochmals der oben beschriebenen Prozedur unterworfen, wobei die Feinstpigmente mit Teilchengrößen von ca. 0,05-0,2 Mikrometer abgetrennt werden.

In der daraufolgenden, schonenden Destillation unter einem Vakuum von 0,2 bar und einer Temperatur von 80-90°C wird das Lösungsmittel-Bindemittel-Gemisch auf ein Volumenverhältnis von

1:3 eingeengt.

**Ansprüche**

1. Verfahren zum Rückgewinnen von Pigmenten, Bindemitteln und Lösungsmitteln aus mit Lack verschmutzten Spülverdünnern auf organischer Basis,
dadurch gekennzeichnet,
daß man die mit Lacken verschmutzten Waschverdünner bzw. Reinigungsverdünner mit konzentrierter Säure versetzt, sodann gründlich rührt, anschließend unter weiterem Rühren mit Lauge versetzt und hierauf die Flüssigkeit einer Schwerkraftabscheidung unterwirft unter Abtrennung der suspendierten Bestandteile von den flüssigen Bestandteilen, daß sodann die flüssigen Bestandteile einer destillativen Trennung unterworfen werden.

2. Verfahren nach Anspruch 1,
dadurch gekennzeichnet,
daß der Klarablauf, gegebenenfalls nach vorherigem Ansäuern und Neutralisieren, einer zweiten Schwerkraftabscheidung unterworfen wird, wobei sich die Feinstpigmente abscheiden.

3. Verfahren nach Anspruch 1-2,
dadurch gekennzeichnet,
daß die Schwerkraftabscheidung in einem Zentrifugalseparator oder mittels Filtration durchgeführt wird.

4. Verfahren nach Anspruch 1-3,
dadurch gekennzeichnet,
daß das Ansäuern mit 96 Gew.-%iger Schwefelsäure durchgeführt wird.

5. Verfahren nach Anspruch 1-4,
dadurch gekennzeichnet,
daß die Neutralisation mit 50 Gew.-%iger Natronlauge durchgeführt wird.